(19) Europäisches Patentamt
European Patent Office
Office européen des brevets

(11) **EP 2 202 204 A1**

(12) **EUROPEAN PATENT APPLICATION**
published in accordance with Art. 153(4) EPC

(43) Date of publication:
**30.06.2010 Bulletin 2010/26**

(51) Int Cl.:
*C01F 7/02* (2006.01)       *B01J 20/02* (2006.01)
*C10G 25/00* (2006.01)      *C10G 25/05* (2006.01)
*H01M 8/06* (2006.01)

(21) Application number: **08829520.9**

(22) Date of filing: **04.09.2008**

(86) International application number:
**PCT/JP2008/065970**

(87) International publication number:
**WO 2009/031613 (12.03.2009 Gazette 2009/11)**

(84) Designated Contracting States:
**AT BE BG CH CY CZ DE DK EE ES FI FR GB GR
HR HU IE IS IT LI LT LU LV MC MT NL NO PL PT
RO SE SI SK TR**
Designated Extension States:
**AL BA MK RS**

(30) Priority: **07.09.2007  JP 2007232366**

(71) Applicant: **Japan Energy Corporation
Tokyo 105-0001 (JP)**

(72) Inventors:
• **TOIDA, Yasuhiro
  Toda-shi
  Saitama 335-0026 (JP)**
• **HERAI, Masataka
  Toda-shi
  Saitama 335-0026 (JP)**

(74) Representative: **Forstmeyer, Dietmar et al
BOETERS & LIECK
Oberanger 32
80331 München (DE)**

(54) **SOLID ACID, PROCESS FOR PRODUCING THE SOLID ACID, METHOD FOR DESULFURIZING HYDROCARBON OIL USING SOLID ACID AS DESULFURIZING AGENT**

(57)     [PROBLEMS] To provide a method for desulfurization with a desulfurizing agent, which can efficiently desulfurize, for example, a hydrocarbon oil as a raw material and fuel for generating hydrogen for use in fuel cells, particularly kerosenes and light oils, without the need to use reduction treatment and hydrogen and at a temperature from room temperature to about 100°C, and a fuel cell system using the desulfurization method. There are also provided a solid acid useful as a constituent of the desulfurizing agent for use in the desulfurization method, and a process for producing the solid acid. [MEANS FOR SOLVING PROBLEMS] A solid acid comprising 20 to 99.9% by mass of aluminum oxide and 0.10 to 3.00% by mass of sulfur and having a specific surface area of not less than 150 $m^2$/g and a pore volume of not less than 0.35 ml/g, and an $I_{1540}/I_{1450}$ ratio of 0.12 or less, wherein $I_{1450}$ represents a peak height of a peak (1450 $\pm$ 5 $cm^{-1}$) attributable to a Lewis acid site as measured by pyridine adsorption Fourier transform infrared spectroscopy, and $I_{1540}$ represents a peak height of a peak (1540 $\pm$ 5 $cm^{-1}$) attributable to a Broensted acid site, and a process for producing the solid acid, a method for desulfurizing a hydrocarbon oil using the solid acid as a desulfurizing agent, and a fuel cell system using the desulfurization method.

**EP 2 202 204 A1**

**Description**

Technical Field

The present invention relates to a solid acid which may be effectively used as, in particular, a desulfurization agent, and a method for preparing the solid acid. The present invention also relates to a method for desulfurizing a hydrocarbon oil using the solid acid as a desulfurization agent, and further, a fuel cell system using the method for desulfurizing (hereinafter, may be referred to as desulfurization method).

Background Art

As a method for desulfurizing a commercial kerosene used for stationary fuel cells for home use or the like, a chemisorption desulfurization method in which a nickel-based desulfurization agent ismainlyusedataround200°Cisstudied. However, the chemisorption desulfurization method has problems in that energy is consumed for heating, time is required for starting the desulfurization, the desulfurization should be conducted under pressure in order to prevent evaporation of the kerosene, a vapor-liquid separator should be provided for separating generated gas from desulfurized kerosene, and thus the system is inevitably complicated due to these above problems and the like. Although a nickel-based desulfurization agent containing copper may maintain a certain degree of activity even at a lower temperature of about 150°C, it is still insufficient to solve the above problems. In addition, the nickel-based desulfurization agent must be previously subjected to reduction treatment before use, and the agent causes a rapid exothermic reaction when coming in contact with oxygen, and as a result, the activity of the agent decreases. Thus, there are problems to be solved in the method of storing the desulfurization agent and in the shutdown procedure. Further, as a nickel compound has toxicity, there is also a problem to be solved that a strict control of the desulfurization agent is necessary when fuel cells are popularly used in common homes (Patent Documents 1 to 4).

Further, although a copper oxide desulfurizing agent used in a petroleum refinery is utilized for desulfurization of a naphtha fraction containing sulfur compounds such as mercaptans at a relatively low temperature of around 120°C, there has been no copper oxide desulfurizing agent having sufficient desulfurization performance for kerosene, gas oil or the like mainly containing benzothiophenes and dibenzothiophenes (Patent Document 5).

Meanwhile, a physical adsorptive desulfurization method using zeolite, activated carbon and the like at about ambient temperature is also studied. However, there are no physical adsorption agents having high performance for kerosene which contains aromatic compounds which are competitively adsorbed with sulfur compounds, and in particular, agents for removing benzothiophenes. A very large volume of adsorption agents is needed, and thus the method was not useful in practice (Patent Documents 6 and 7).

The inventors of the present invention have proposed a desulfurization agent for a hydrocarbon oil characterized by containing a solid acid and/or an activated carbon supporting transition metal oxide, and copper and silver components. However, a conventional solid acid has a small specific surface area, and thus, does not adsorb a large amount of sulfur compounds, a conventional transition metal oxide-supporting activated carbon adsorbs only a small amount of sulfur compounds in the case of oil with low sulfur concentrations, and a conventional desulfurization agent for a hydrocarbon oil containing copper and silver components adsorbs a small amount of dibenzothiophenes, all of which do not exhibit sufficient performance (Patent Documents 8 to 10).

As a method for preparing an alumina containing a sulfate radical, a method for preparing a solid acid catalyst is known, in which the catalyst is used in a reaction process of alkylation or polymerization, characterized by spraying 80 parts by weight or less of a sulfate radical-containing solution to 100 parts by weight of γ-alumina particles of aluminum hydroxide or oxide, to thereby support a sulfate radical in an amount of 0.5 to 15% by weight as an elemental sulfur. However, the performance as a desulfurization agent for a hydrocarbon oil is low (Patent Document 11).

[Patent Document 1] JP-B-H06-65602
[Patent Document 2] JP-B-H07-115842
[Patent Document 3] JP-A-H06-315628
[Patent Document 4] JP-A-H06-228570
[Patent Document 5] JP-A-2000-42407
[Patent Document 6] JP-A-2003-49172
[Patent Document 7] JP-A-2005-2317
[Patent Document 8] WO 2005-073348
[Patent Document 9] WO 2007-015391
[Patent Document 10] WO 2007-020800
[Patent Document 11] JP-A-H05-96171

Disclosure of the Invention

Problems to be solved by the Invention

An object of the present invention is to provide a desulfurization method for a hydrocarbon oil, in particular, kerosene, gas oil, or the like as a raw fuel for generating hydrogen used in a fuel cell, by using a desulfurization agent that requires neither reduction treatment nor hydrogen and can efficiently desulfurize a hydrocarbon oil at a temperature of ambient temperature to about 100°C, and further, to provide a fuel cell system using the desulfurization method. Another object of the present invention is to provide a solid acid which is useful as a component of a desulfurization agent used in the desulfurization method, and a method for preparing the solid acid.

Means for solving the Problems

The inventors of the present invention have intensively studied in order to solve the above-mentioned problems. As a result, the inventors have found that, when desulfurization is performed with a desulfurization agent comprising a solid acid containing aluminum oxide (alumina) as a main component and having a specified sulfur content and specified physical properties, hydrocarbon oils such as kerosene and gas oil can also be efficiently desulfurized under a non-hydrogen atmosphere and low temperature condition. The finding has led to the completion of the present invention.

In other words, as described below, the present invention relates to a solid acid, a production method for the solid acid, a desulfurization method for a hydrocarbon oil using the solid acid as a desulfurization agent, and a fuel cell system using the desulfurization method.

[1] A solid acid comprising 20 to 99.9% by mass of aluminum oxide and 0.10 to 3.00% by mass of sulfur, and having a specific surface area of 150 $m^2/g$ or more, a pore volume of 0.35 ml/g or more, and a ratio ($I_{1,540}/I_{1,450}$) of a peak height $I_{1,540}$ of a peak ($1,540 \pm 5$ $cm^{-1}$) attributed to a Brønsted acid site to a peak height $I_{1,450}$ of a peak ($1,450 \pm 5$ $cm^{-1}$) attributed to a Lewis acid site of 0.12 or less, these peaks being measured by pyridine adsorption Fourier transform infrared spectroscopy.

[2] A solid acid according to the above item [1], in which the solid acid has a ratio (B/A) of a mass loss rate (B) from 250°C to 1,000°C to a mass loss rate (A) from 250°C to 700°C of 1.3 or more.

[3] A solid acid according to the above item [1] or [2], in which aluminum oxide is γ-alumina.

[4] A method for preparing the solid acid according to any one of the above items [1] to [3], comprising impregnating aluminum oxide having a specific surface area of 200 $m^2/g$ or more with a sulfuric acid aqueous solution, and performing calcination at 500 to 980°C.

[5] A method for preparing the solid acid according to the above item [4], in which the sulfuric acid aqueous solution has a sulfuric acid concentration of 0.01 to 6 mol/L.

[6] A method for desulfurizing a hydrocarbon oil, comprising bringing a desulfurization agent comprising or containing the solid acid according to any one of the above items [1] to [3] into contact with the hydrocarbon oil.

[7] A method for desulfurizing a hydrocarbon oil according to the above item [6], comprising bringing the desulfurization agent into contact with the hydrocarbon oil at a temperature of 100°C or less.

[8] A method for desulfurizing a hydrocarbon oil according to the above item [6] or [7], comprising, as a pretreatment in the method for desulfurizing, previously performing desulfurization with any one or both of an activated carbon desulfurization agent and a desulfurization agent comprising or containing a solid acid having a ratio ($I_{1,540}/I_{1,450}$) of a peak height $I_{1,540}$ of a peak ($1,540 \pm 5$ $cm^{-1}$) attributed to a Brønsted acid site to a peak height $I_{1,450}$ of a peak ($1,450 \pm 5$ $cm^{-1}$) attributed to a Lewis acid site of more than 0.12, these peaks being measured by pyridine adsorption Fourier transform infrared spectroscopy.

[9] A method for desulfurizing a hydrocarbon oil according to any one of the above items [6] to [7], comprising, as a pretreatment in the method for desulfurizing, performing desulfurization with an activated carbon desulfurization agent and then previously performing desulfurization with a desulfurization agent comprising or containing a solid acid having a ratio ($I_{1,540}/I_{1,450}$) of a peak height $I_{1,540}$ of a peak (1540$\pm$5 cm$^{-1}$) attributed to a Brønsted acid site to a peak height $I_{1,450}$ of a peak (1,450$\pm$5 cm$^{-1}$) attributed to a Lewis acid site of more than 0.12, the peaks being measured by pyridine adsorption Fourier transform infrared spectroscopy.

[10] A method for desulfurizing a hydrocarbon oil according to any one of the above items [6] to [9], in which the hydrocarbon oil is kerosene.

[11] A fuel cell system, using the method for desulfurizing a hydrocarbon oil according to any one of the above items [6] to [10].

Effects of the Invention

According to the desulfurization method of the present invention, hydrocarbon oils such as kerosene and gas oil can be brought into contact with a desulfurization agent and desulfurized in a liquid phase state at a low temperature of ambient temperature to about 100°C. In addition, as the desulfurization method requires neither reduction treatment nor hydrogen addition, the desulfurization can be efficiently and economically performed. Therefore, it is possible to remove sulfur compounds by using a more compact facility and at a lower cost than before. If the desulfurization method is used for desulfurizing kerosene, for example, as a raw fuel for a fuel cell, the starting and maintenance of the fuel cell becomes relatively easier, and further, a system of the fuel cell may be simplified.

Brief Description of the Drawing

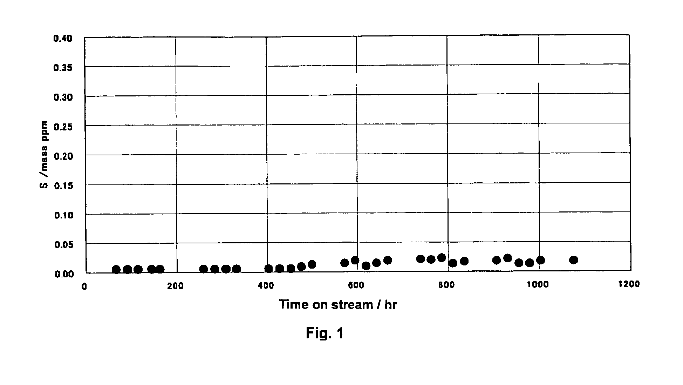

Fig. 1 is a diagram illustrating time-dependent change of an outlet sulfur content in the case of using an activated carbon desulfurization agent, a Brønsted acid desulfurization agent, and a Lewis acid desulfurization agent (Example 22).

Best Mode for carrying out the Invention

[Solid acid]

The solid acid of the present invention contains 20 to 99.9% by mass of aluminum oxide, so-called alumina, and 0.10 to 3.00% by mass of sulfur, and has a specific surface area of 150 m$^2$/g or more, a pore volume of 0.35 ml/g or more, and a ratio ($I_{1,540}/I_{1,450}$) of a peak height $I_{1,540}$ of a peak (1, 540$\pm$5 cm$^{-1}$) attributed to a Brønsted acid site to a peak height $I_{1,450}$ of a peak (1,450$\pm$5 cm$^{-1}$) attributed to a Lewis acid site of 0.12 or less, the peaks being measured by pyridine adsorption Fourier transform infrared spectroscopy. In addition, the solid acid preferably has 1.3 or more of a ratio (B/A) of a mass loss rate (B) from 250°C to 1,000°C to a mass loss rate (A) from 250°C to 700°C.

The above-mentioned solid acid can be suitably used for adsorption removal of a sulfur compound in a hydrocarbon oil. For example, the solid acid is suitable as a desulfurization agent for adsorption removal of a sulfur compound contained in kerosene or gas oil at a temperature of ambient temperature to about 100°C.

The solid acid of the present invention is preferably alumina containing sulfur in such a form that a sulfate radical is supported (which may be referred to as sulfate radical/alumina), and exhibits excellent desulfurization performance. The solid acid exhibits very satisfactory desulfurization performance in the range of a sulfur content of 0.10 to 3.00% by mass. The solid acid has a specific surface area of 150 m$^2$/g or more, preferably 200 m$^2$/g or more, and more preferably 250 m$^2$/g or more, and a pore volume of 0.35 ml/g or more, preferably 0.4 ml/g or more, and more preferably 0.5 ml/g or more. When the solid acid has a specific surface area of 150 m$^2$/g or more and a pore volume of 0.35 ml/g or more, sufficient desulfurization performance is obtained.

In addition, the solid acid of the present invention has a ratio of a peak height $I_{1,540}$ of a peak (1,540$\pm$5 cm$^{-1}$) attributed to a Brønsted acid site to a peak height $I_{1,450}$ of a peak (1,450$\pm$5 cm$^{-1}$) attributed to a Lewis acid site, that is $I_{1,540}/I_{1,450}$, of 0.12 or less, preferably 0.01 or less, the peaks being measured by pyridine adsorption Fourier transform infrared spectroscopy (FT-IR). The Brønsted acid site, which is a weak acid site, plays an important role in catalysis in a reaction of generating heavier sulfur compounds from thiophenes and benzothiophenes, but has almost no contribution to adsorption removal of dibenzothiophenes. On the other hand, the Lewis acid site, which is a strong acid site, has high physical adsorption performance for dibenzothiophenes owing to n-electron interaction with a benzene ring.

Therefore, in the case of removing dibenzothiophenes rather than thiophenes and benzothiophenes, it is preferred that the remaining amount of the Brønsted acid site be small. Thus, the desulfurization agent for a hydrocarbon oil such as kerosene containing dibenzothiophenes should have the peak height ratio ($I_{1,540}/I_{1,450}$) of 0.12 or less.

Further, the solid acid of the present invention has preferably a ratio (B/A) of a mass loss rate (B) from 250°C to 1,000°C to a mass loss rate (A) from 250°C to 700°C of 1.3 or more, and more preferably 1.5 or more. When the ratio (B/A) is 1.3 or more, sufficient desulfurization performance is obtained. The reason is not thoroughly clear, but this is probably because, when the ratio (B/A) is large, there exist a large amount of stable sulfate radicals, which are desorbed only at high temperatures, and when the ratio (B/A) is small, the remaining amount of unstable sulfate radicals is increased. In the solid acid of the present invention, it is preferred that aluminum oxide (alumina) has γ-alumina having a spinel structure or a spinel-like structure. By selecting γ-alumina, a sulfate radical is stably supported, and a satisfactory solid acidity is expressed. As a result, when being used as a desulfurization agent, excellent desulfurization performance may be exhibited.

[Method for preparing the solid acid]

A method for preparing the solid acid of the present invention is not particularly limited as long as there is provided a solid acid containing 20 to 99.9% by mass of aluminum oxide (alumina) and 0.10 to 3.00% by mass of sulfur and exhibiting the above-mentioned characteristics. Preferably, the solid acid may be prepared by including a component for forming a sulfate radical into alumina, and then performing calcination.
The solid acid may contain other metal components other than alumina in such a range that effects of the present invention are obtained. Examples of such other metals which may be used include zirconium, tungsten, titanium, hafnium, vanadium, chromium, manganese, iron, silicon, tin, gallium and the like. A composite oxide and/or an aqueous composite oxide may be used, and moieties of a single oxide and/or an aqueous oxide may be mixed (those may referred to as an alumina mixture, including the case where aluminum oxide is used alone). The portion made up of alumina in the solid acid is 20 to 100% by mass, preferably 40 to 100% by mass, more preferably 50 to 100% by mass, particularly preferably 70 to 100% by mass, and most preferably 80 to 100% by mass. 20% by mass or more of alumina provide desired desulfurization performance, and the higher alumina content is the better. Further, as alumina is particularly inexpensive, it is also preferred from an economical viewpoint that the content be higher.
There exist many kinds of alumina having different crystal structures, and in the present invention γ-alumina having a spinel or spinel-like structure is preferably used. The structure can be confirmed by x-ray diffraction. In particular, in the case where a sulfate radical is supported in order to improve a desulfurization activity, noncrystalline activated alumina hardly expresses solid superacidity, but γ-alumina strongly uptakes a sulfate radical to express satisfactory solid superacidity. The reason why activated alumina hardly expresses solid superacidity is not clear, but the surface is thought to be dissolved with sulfuric acid. Further, α-alumina or the like has a low specific surface area, and thus exhibits low performance as an adsorptive desulfurization agent. It is important that the adsorptive desulfurization agent have a large specific surface area in order to obtain high desulfurization performance. Thus, alumina is preferably γ-alumina having a specific surface area of 200 $m^2$/g or more, and more preferably 300 $m^2$/g or more.
A preparation method for aluminum oxide containing a sulfate radical (sulfate radical/alumina) may be an impregnation method comprising impregnating alumina with sulfuric acid and performing calcination, or may be a kneading method comprising mixing an alumina source made up of aluminum hydroxide and/or hydrated oxide with a solid sulfate radical source made up of ammonium sulfate and the like and performing calcination. In addition, sulfate radical/alumina can also be obtained by allowing a sulfur content to remain during preparing aluminum hydroxide (pseudo-boehmite) by neutralization precipitation of sodium aluminate and aluminum sulfate and washing. Of those, an impregnation method comprising impregnating alumina, in particular, γ-alumina with a sulfuric acid aqueous solution is preferred because the method is simple and provides stable performance.
It should be noted that, when a sulfur content remains in a production process for alumina as described above, alumina may be used as is without adding an additional sulfuric acid source by the impregnation method, the kneading method or the like. It is more preferred that a sulfuric acid source be added.
In the case of the impregnation method, alumina is preferably dried before impregnation with a sulfuric acid aqueous solution. After drying, alumina is measured for its water adsorption rate, and impregnated with a certain amount of the sulfuric acid aqueous solution with respect to the water adsorption rate, with the result that sulfate radical/alumina having certain constant characteristics can be prepared with good reproducibility. Further, the impregnation with the sulfuric acid aqueous solution in a volume comparable to the water adsorption rate allows the unevenness in adsorption of a sulfate radical to be reduced.
The concentration of the sulfuric acid aqueous solution used for impregnation is preferably 0.01 to 6 mol/L. When a highly concentrated sulfuric acid aqueous solution having the concentration of more than 6 mol/L is used, the amount of a sulfate radical remaining after calcination may become excess, and an unstable sulfate radical which is easily desorbed is formed. When the concentration is less than 0.01 mol/L, desired desulfurization performance is not obtained, and hence, there is no point in supporting a sulfate radical.
The alumina mixture prepared as described above is calcinated to obtain a solid acid. The solid acid can be suitably used as an adsorption removal agent of a sulfur compound in a hydrocarbon as a desulfurization agent, for example. The calcination is performed at a temperature of 500°C or more, preferably 700 to 980°C, and more preferably 800 to 900°C. When the temperature is less than 700°C, in particular, less than 500°C, there remains an unstable sulfate radical which is weakly adsorbed sulfuric acid, and hence, the desulfurization performance is not enhanced. Meanwhile, when the temperature is more than 980°C, the specific surface area is remarkably reduced, and in this case, the desulfurization performance is also not enhanced.

The calcination can be performed using a rotary kiln while flowing air, for example. The flow of air can prevent a sulfuric acid component from being readsorbed, and as a result, can reduce the formation of an unstable sulfate radical, and thus, can be preferably employed for preparation of a solid acid containing sulfate radical/alumina suitable for a desulfurization agent. The flow rate of air is preferably 1 to 30 m/sec and particularly preferably 10 to 20 m/sec. When the flow rate is smaller than 1 m/sec, the effect of preventing a sulfuric acid component and water from being readsorbed is small, on the other hand when the flow rate is larger than 30 m/sec, a uniform temperature distribution is hardly achieved. Further, the use of the rotary kiln allows the uneven adsorption of a sulfate radical to be reduced.

By performing calcination as described above, there can be obtained a solid acid containing a Lewis acid site as a strong acid site in a large percentage, a Brønsted acid site as a weak acid site in a small percentage, and a stable sulfate radical which is desorbed only at high temperature in a large percentage.

As a shaped product is preferably used for applications of the desulfurization agent, during production, for example, prior to calcination, it is preferable to form and shape while taking shrinkage due to calcination into consideration in advance. The shape is not particularly limited. However, in order to increase a concentration gradient of a sulfur compound, in the case of a continuous flow type, a small shape is preferred within such a range that a differential pressure between before and after the vessel filled with the desulfurization agent does not become large. Examples of the shape include a globular shape, a columnar shape, a cylindrical shape, a trefoil shape, and a quatrefoil shape, and the shape may be a ring shape or a saddle shape. Of those, a globular shape, a columnar shape, and a quatrefoil shape are particularly preferred. For the size in the case of the globular shape, the diameter is preferably 0.5 to 5 mm and particularly preferably 1 to 3 mm. In the case of the columnar shape, the diameter is preferably 0.1 to 4 mm and particularly preferably 0.12 to 2 mm, and the length is preferably 0.5 to 5 times of the diameter and particularly preferably 1 to 2 times.

[Desulfurization agent]

The solid acid obtained as described above can be used as-is as a desulfurization agent in the desulfurization method of the present invention. However, the solid acid may be mixed with inorganic microparticles such as silica, alumina, other zeolites and the like, activated carbon and the like, further added binders such as clay and pitch, and then molded and calcined, to thereby improve an adsorption performance for a sulfur compound difficult to be adsorbed by the desulfurization agent, or improve a diffusion velocity of a sulfur compound by increasing the presence amount of mesopores and macropores. Further, the adsorption performance may be improved by complexation with metals, including supporting or mixing a metal oxide. For the metal, in order to improve Lewis acidity, it is particularly preferred that gallium be supported.

The desulfurization agent containing the solid acid is prepared so as to retain the above-mentioned physical properties of the solid acid, that is, contain 0.10 to 3.00% by mass of sulfur, have a specific surface area of 150 $m^2/g$ or more, more preferably 200 $m^2/g$ or more, and still more preferably 250 $m^2/g$ or more, a pore volume of 0.35 ml/g or more, more preferably 0.4 ml/g or more, and still more preferably 0.5 ml/g or more, and a ratio ($I_{1,540}/I_{1,450}$) of a peak height $I_{1,540}$ of a peak ($1,540 \pm 5$ $cm^{-1}$) attributed to a Brønsted acid site to a peak height $I_{1,450}$ of a peak ($1,450 \pm 5$ $cm^{-1}$) attributed to a Lewis acid site of 0.12 or less wherein the peaks are measured by pyridine adsorption Fourier transform infrared spectroscopy.

Further, similarly, the desulfurization agent is preferably prepared so as to have a ratio (B/A) of a mass loss rate (B) from 250°C to 1,000°C to a mass loss rate (A) from 250°C to 700°C of 1.3 or more.

When the desulfurization agent obtained as described above is left to stand for a long period of time and adsorbs moisture in contact with air, the desulfurization performance, in particular, desulfurization performance of dibenzothiophenes is decreased. In such a case, the desulfurization agent is subjected to heat treatment under an air atmosphere, preferably under an air stream at a high temperature of 200°C or more, more preferably 300°C or more, and still more preferably 500°C or more before use. When the pretreatment (drying treatment) is performed, the desulfurization performance is improved. The reason why the pretreatment at a high temperature of 500°C or more improves the desulfurization performance is not thoroughly clear, but it is probably thought to be associated with the fact that a weak acid site (Brønsted acid site) remains in a large amount due to moisture adsorption when the pretreatment is not performed. In particular, because a strong acid site (Lewis acid site) has high physical adsorption performance for dibenzothiophenes owing to n-electron interaction with a benzene ring, it is preferred that the remaining amount of the Brønsted acid site be smaller when dibenzothiophenes rather than thiophenes and benzothiophenes are removed. It should be noted that, when the desulfurization agent is used before moisture adsorption after production, calcination is performed at 500 to 980°C in production, and hence, the above-mentioned heat treatment at 500°C or more can be omitted.

In general, percentages of a Lewis acid amount and a Brønsted acid amount can be relatively compared by pyridine adsorption Fourier transform infrared spectroscopy (FT-IR). A peak of an absorbance attributed to a Lewis acid site is detected at $1,450 \pm 5$ $cm^{-1}$, a peak of an absorbance attributed to a Brønsted acid site is detected at $1,540 \pm 5$ $cm^{-1}$, and a peak of an absorbance attributed to both of a Lewis acid and a Brønsted acid is detected at $1,490 \pm 5$ $cm^{-1}$.

Thus, when the peak height of the Lewis acid site (1,450$\pm$5 cm$^{-1}$) is defined as I$_{1,450}$ and the peak height of the Brønsted acid site (1,540$\pm$5 cm$^{-1}$) is defined as I$_{1,540}$, a difference in acidity can be determined by relatively comparing the ratio I$_{1,540}$/I$_{1,450}$ of the Brønsted acid amount to the Lewis acid amount. If I$_{1,540}$/I$_{1,450}$ is 0.12 or less and preferably 0.01 or less, high adsorption performance for dibenzothiophenes may be obtained.

The specific surface area of the desulfurization agent has a large influence on the adsorption capacity for a sulfur compound, and hence is preferably 200 m$^2$/g or more and particularly preferably 250 m$^2$/g or more. The pore volume is preferably 0.35 ml/g or more, more preferably 0.4 ml/g or more, and particularly preferably 0.5 ml/g or more. Further, the pore volume of a pore diameter range within a specified range affects the desulfurization performance. The pore volume of a pore diameter range of less than 10 Å is preferably 0.1 ml/g or more and particularly preferably 0.2 ml/g or more in order to increase the adsorption capacity of a sulfur compound. Further, the pore volume of a pore diameter range of 10 Å or more to less than 0.1 $\mu$m is preferably 0.05 ml/g or more and particularly preferably 0.1 ml/g or more in order to increase a diffusion velocity of a sulfur compound in a pore. The pore volume of a pore diameter range of 0.1 $\mu$m or more is preferably 0.3 ml/g or less and particularly preferably 0.25 ml/g or less in order to increase the mechanical strength of a shaped product.

It should be noted that, in general, the specific surface area and the total pore volume are measured by a nitrogen adsorption method, and the macropore volume is measured by a mercury intrusion method. The nitrogen adsorption methodissimple,isgenerally used, and explained in various documents. For example, Kazuhiro Washio: Shimadzu Review, 48(1), 35-49 (1991), ASTM (American Society for Testing and Materials) Standard Test Method D 4365-95 and the like can be given.

The crush strength of the desulfurization agent is preferably 1 kg/pellet or more and particularly preferably 2 kg/pellet or more because the desulfurization agent does not crack. In general, the crush strength is measured with a compressive strength measuring instrument such as a Kiya type tablet crush strength measuring instrument (Toyama Sangyo Co., Ltd.).

As mentioned above, the desulfurization agent used in the desulfurization method of the present invention preferably contains sulfate radical/alumina. Sulfate radical/alumina is classified into a solid superacid catalyst. The solid superacid catalyst refers to a catalyst made up of a solid acid having higher acid strength than 100% sulfuric acid which has Hammett's acidity function H0 of -11.93.

The acid strength (H0) is defined by the capability that acid sites on the catalyst surface donate protons to a base or receive electron pairs from a base, and is indicated by a pKa value. The acid strength can be measured by a known indicator method, a gaseous base adsorption method or the like. The acid strength of a solid acid catalyst can be directly measured by using an acid-base conversion indicator with a known pKa value, for example. If the indicator on the surface of the catalyst is observed to change its color to an acidic color when the catalyst is immersed in a dry cyclohexane or a sulfuryl chloride solution containing p-nitrotoluene (pKa value; -11.4), m-nitrotoluene (pKa value; -12.0), p-nitrochlorobenzene (pKa value; -12.7), 2,4-dinitrotoluene (pKa value; -13.8), 2,4-dinitrofluorobenzene (pKa value; -14.5), and 1,3,5-trichlorobenzene (pKa value; -16.1), the acid strength of the catalyst is a value equivalent to or smaller than the pKa value of the indicator which changes its color to the acidic color. The acid strength of a catalyst cannot be measured by the indicator when the catalyst is colored, but it is reported that the acid strength can be presumed from the isomerization activity of butane or pentane ("Studies in Surface Science and Catalysis" Vol. 90, ACID-BASE CATALYSIS II, p.507 (1994)).

[Desulfurization method]

The desulfurization method of the present invention comprises bringing a desulfurization agent comprising or containing the solid acid obtained in the above-mentioned manner into contact with a hydrocarbon oil.

As the hydrocarbon oil serving as an object of the desulfurization method of the present invention, there can be used paraffin hydrocarbon oils such as octane, nonane, decane, undecane, dodecane, tridecane, tetradecane, and pentadecane, aromatic hydrocarbon oils such as benzene, toluene, xylene, ethylbenzene, and trimethylbenzene, and further, kerosene and gas oil.

It should be noted that, typical examples of the hydrocarbon oil include kerosene and gas oil, and the hydrocarbon oil may also be kerosene containing a lighter hydrocarbon oil such as naphtha, kerosene containing a heavier hydrocarbon oil such as gas oil, an oil having a narrower boiling point range than commercially available kerosene, an oil obtained by removing a specified component such as an aromatic compound from commercially available kerosene, gas oil containing a lighter hydrocarbon oil such as kerosene, an oil having a narrower boiling point range than commercially available gas oil, and an oil obtained by removing a specified component such as an aromatic compound from commercially available gas oil.

Further, when a hydrocarbon oil is used as a hydrogen source in a fuel cell or the like, sulfur contained in a hydrocarbon oil must be strictly removed because it is a catalyst poison for a reforming catalyst in a hydrogen production process. The desulfurization method of the present invention can reduce a sulfur compound to a very slight concentration, and hence can be particularly preferably used when kerosene or gas oil is used as an on-board reforming fuel for a fuel cell powered vehicle. Thus, the desulfurization method of the present invention can be incorporated into a fuel cell system, to thereby produce hydrogen without poisoning a reforming catalyst for producing hydrogen and supply hydrogen to a fuel cell. The fuel cell system into which the desulfurization method of the present invention is incorporated may be of a stationary type or a mobile type (for example, a fuel cell powered vehicle).

The desulfurization method of the present invention has a remarkable effect in removal of thiophenes, benzothiophenes, and dibenzothiophenes, and hence can be preferably used for hydrocarbon oils containing the other sulfur compounds in a small amount, inter alia, kerosene and gas oil.

Kerosene is mainly made up of hydrocarbons having about 12 to 16 carbon atoms, and an oil having a density (15°C) of 0.79 to 0.85 g/cm$^3$ and a boiling point ranging from about 150 to 320°C. Kerosene contains a large amount of paraffin hydrocarbons, while contains about 0 to 30% by volume of aromatic hydrocarbons and also contains about 0 to 5% by volume of polycyclic aromatics. In general, No. 1 kerosene defined as lighting, heating, and kitchen fuels in Japanese Industrial Standard JIS K2203 becomes a target. With respect to the quality, there is such a definition as being a flash point of 40°C or more, a 95% distillation temperature of 270°C or less, a sulfur content of 0.008% by mass or less, a smoke point of 23 mm or more (21 mm or more for a cold climate), copper plate corrosion (50°C, 3 hours) of 1 or less, and a color (Saybolt) of +25 or more. In general, the sulfur content is several ppm to 80 ppm or less and the nitrogen content is several ppm to about 10 ppm.

Gas oil is mainly made up of hydrocarbons having about 16 to 20 carbon atoms, and is a oil having a density (15°C) of 0.82 to 0.88 g/cm$^3$ and a boiling point ranging from about 140 to 390°C. Gas oil not only contains a large amount of paraffin hydrocarbons, but also contains about 10 to 30% by volume of aromatic hydrocarbons and about 1 to 10% by volume of polyclyclic aromatics. The sulfur content is several ppm to 100 ppm or less and the nitrogen content is about several ppm to several tens ppm.

The method of bringing a desulfurization agent into contact with a hydrocarbon oil may be of a batch type or a continuous flow type, and more preferred is a continuous flow type including filling a vessel (reactor) with a prepared desulfurization agent and flowing a hydrocarbon oil therethrough.

In the case of the continuous flow type, for conditions in bringing a desulfurization agent into contact with a hydrocarbon oil, the pressure is preferably atmospheric pressure to 1 MPaG and particularly preferably atmospheric pressure to 0.1 MPaG. The pressure does not need to be increased because no gas is generated during desulfurization, and may be any pressure enough to obtain a uniform flow. For the direction of a flow, bottom up (up flow) is preferred because a uniform flow can be achieved.

The flow rate is preferably 0.001 to 10 hr$^{-1}$ in terms of LHSV and particularly preferably 0.01 to 1 hr$^{-1}$. The apparent linear velocity (value obtained by dividing the flow rate of a hydrocarbon oil by the cross section area of a desulfurization agent layer) is preferably 0.001 to 10 cm/min, more preferably 0.005 to 1 cm/min, and particularly preferably 0.01 to 0.1 cm/min. When the apparent linear velocity is large, a moving velocity of a liquid phase itself becomes larger than an adsorption velocity (a moving velocity from a liquid phase to a solid phase), with the result that a sulfur component is not completely removed within time until the liquid phase reaches the outlet of an adsorption layer. Thus, a problem that the liquid phase containing an unremoved sulfur component flows out from the outlet tends to occur. In contrast, when the apparent linear velocity is small, the cross section area of an desulfurization agent layer becomes large at the same flow rate, and hence, a dispersion state of a liquid becomes poor. As a result, the unevenness occurs in the flow rate of a hydrocarbon oil which passes thorough the cross section perpendicular to the flow direction of the adsorbent layer, and mal-distribution occurs about the sulfur component adsorbed in the cross section of the desulfurization agent layer, which causes uneven loading to the desulfurization agent. Thus, also in this case, desulfurization cannot be performed in a sufficiently efficient manner.

The temperature at which desulfurization treatment is performed is preferably around ambient temperature, for example -20 to 120°C, particularly preferably -10 to 100°C, and still more preferably 0 to 60°C. If the temperature exceeds 120°C, the physical adsorption performance is decreased, and hence, sufficient desulfurization performance for dibenzothiophenes which are removed mainly by physical adsorption to Lewis acid sites cannot be obtained. On the other hand, when the temperature is less than -20°C, the reaction activity (chemical adsorption performance) is decreased, and hence, the desulfurization performance for, in particular, thiophenes and benzothiophenes may be decreased.

Because water and oxygen-containing compounds such as an alcohol in the hydrocarbon oil may deteriorate the desulfurization performance, it is preferred that a hydrocarbon oil be previously subjected to dehydration treatment with a dehydrating agent such as a molecular sieve before bringing into contact with a desulfurization agent.

Thiophenes are sulfur compounds which are heterocyclic compounds having one or more sulfur atoms as hetero atoms, wherein the heterocyclic compounds have a five- or six-membered heterocyclic ring, and aromaticity (having two or more double bonds in the heterocyclic ring), and further, the heterocyclic ring is not condensed with a benzene ring, and derivatives thereof. Also included are compounds having heterocyclic rings condensed to each other. Thiophene is a sulfur compound having a molecular formula of $C_4H_4S$ and a molecular weight of 84.1, and is also called thiofuran. As other typical thiophenes, methylthiophene (thiotolene, molecular formula: $C_5H_6S$, molecular weight: 98.2), thiapyrane (penthiophene, molecular formula: $C_5H_6S$, molecular weight: 98.2), thiophthene (molecular formula: $C_6H_4S_2$,

molecular weight: 140), tetraphenylthiophene (thionessal, molecular formula: $C_{20}H_{20}S$, molecularweight: 388), dithienylmethane (molecularformula: $C_9H_8S_2$, molecular weight: 180), and derivatives threrof can be given.

Benzothiophenes are sulfur compounds which are heterocyclic compounds having one or more sulfur atoms as hetero atoms, wherein the heterocyclic compounds have a five- or six-membered heterocyclic ring and have aromaticity (having two or more double bonds in the heterocyclic ring), and further, the heterocyclic ring is condensed with one benzene ring, and derivatives thereof. Benzothiophene is a sulfur compound having a molecular formula of $C_8H_6S$ and a molecular weight of 134, and is also called thionaphthene or thiocoumarone. As other typical benzothiophenes, alkyl benzothiophenes such as methylbenzothiophene, dimethylbenzothiophene, trimethylbenzothiophene, tetramethylbenzothiophene, pentamethylbenzothiophene, hexamethylbenzothiophene, methylethylbenzothiophene, dimethylethylbenzothiophene, trimethylethylbenzothiophene, tetramethylethylbenzothiophene, pentamethylethylbenzothiophene, methyldiethylbenzothiophene, dimethyldiethylbenzothiophene, trimethyldiethylbenzothiophene, tetramethyldiethylbenzothiophene, methylpropylbenzothiophene, dimethylpropylbenzothiophene, trimethylpropylbenzothiophene, tetramethylpropylbenzothiophene, pentamethylpropylbenzothiophene, methylethylpropylbenzothiophene, dimethylethylpropylbenzothiophene, trimethylethylpropylbenzothiophene, and tetramethylethylpropylbenzothiophene; thiachromene (benzothia-γ-pyrane, molecular formula: $C_9H_8S$, molecular weight: 148), dithianaphthalene (molecular formula: $C_8H_6S_2$, molecular weight: 166), and derivatives thereof can be given.

Dibenzothiophenes are sulfur compounds which are heterocyclic compounds having one or more sulfur atoms as hetero atoms, wherein the heterocyclic compounds have a five- or six-membered heterocyclic ring having aromaticity (having two or more double bonds in the heterocyclic ring), and further, the heterocyclic ring is condensed with two benzene rings, and derivatives thereof. Dibenzothiophene is a sulfur compound having a molecular formula of $C_{12}H_8S$ and a molecular weight of 184, and is also called diphenylene sulfide, biphenylene sulfide, or diphenylene sulfate 4-methyldibenzothiophene and 4,6-dimethyldibenzothiophene are well known as compounds that can be hardly desulfurized in hydrorefining. As other typical dibenzothiophenes, alkyl dibenzothiophenes such as trimethyldibenzothiophene, tetramethyldibenzothiophene, pentamethyldibenzothiophene, hexamethyldibenzothiophene, heptamethyldibenzothiophene, octamethyldibenzothiophene, methylethyldibenzothiophene, dimethylethyldibenzothiophene, trimethylethyldibenzothiophene, tetramethylethyldibenzothiophene, pentamethylethyldibenzothiophene, hexamethylethyldibenzothiophene, heptamethylethyldibenzothiophene, methyldiethyldibenzothiophene, dimethyldiethyldibenzothiophene, trimethyldiethyldibenzothiophene, tetramethyldiethyldibenzothiophene, pentamethyldiethyldibenzothiophene, hexamethyldiethyldibenzothiophene, heptamethyldiethyldibenzothiophene, methylpropyldibenzothiophene, dimethylpropyldibenzothiophene, trimethylpropyldibenzothiophene, tetramethylpropyldibenzothiophene, pentamethylpropyldibenzothiophene, hexamethylpropyldibenzothiophene, heptamethylpropyldibenzothiophene, methylethylpropyldibenzothiophene, dimethylethylpropyldibenzothiophene, trimethylethylpropyldibenzothiophene, tetramethylethylpropyldibenzothiophene, pentamethylethylpropyldibenzothiophene, and hexamethylethylpropyldibenzothiophene, and thianthrene (diphenylene disulfide, molecular formula: $C_{12}H_8S_2$, molecular weight: 216), thioxanthene (dibenzothiopyran, diphenylmethane sulfide, molecular formula: $C_{13}H_{10}S$, molecular weight: 198), and derivatives thereof can be given.

Major sulfur compounds contained in kerosene and gas oil are benzothiophenes and dibenzothiophenes, but thiophenes, mercaptans (thiols), sulfides, disulfides, and carbon disulfide may also be included. A gaschromatograph-flame photometric detector (GC-FPD), a gas chromatograph-atomic emission detector (GC-AED), a gas chromatograph-sulfur chemiluminescence detector (GC-SCD), a gas chromatograph-inductively coupled plasma mass spectrometer (GC-ICP-MS), and the like may be used for qualitative and quantitative analyses of those sulfur compounds. GC-ICP-MS is most preferred for analysis of the mass ppb level (see JP-A-2006-145219).

Both thiophenes and benzothiophenes have a heterocyclic ring which contains a sulfur atom as a hetero atom and exhibits a high reactivity, and a heterocyclic ring cleavage, a reaction between a heterocyclic ring and an aromatic ring, or decomposition easily occurs in the presence of a solid acid. Dibenzothiophenes exhibit lower reactivity as compared with thiophenes and benzothiophenes because dibenzothiophenes have benzene rings bonded to both sides of the thiophene ring. Conventional solid acids such as sulfate radical/zirconia and tungstated zirconia exhibit low desulfurization performance for dibenzothiophenes. The desulfurization agent used in the present invention has a high specific surface area, a large pore volume, and a Lewis acid site, and hence, has high desulfurization performance even for dibenzothiophenes.

[Pretreatment in desulfurization method]

The present invention includes a method involving, as a pretreatment in the desulfurization method, previously performing desulfurization with any one or both of an activated carbon desulfurization agent and a desulfurization agent using a solid acid having a ratio ($I_{1,540}/I_{1,450}$) of a peak height $I_{1,540}$ of a peak ($1,540 \pm 5$ cm$^{-1}$) attributed to a Brønsted acid site to a peak height $I_{1,450}$ of a peak ($1,450 \pm 5$ cm$^{-1}$) attributed to a Lewis acid site of more than 0.12, the peaks being measured by pyridine adsorption Fourier transform infrared spectroscopy.

It should be noted that, in the present invention, hereinafter, a solid acid having the ratio $I_{1,540}/I_{1,450}$ of 0.12 or less is referred to as a Lewis acid desulfurization agent and a solid acid having the ratio $I_{1,540}/I_{1,450}$ of more than 0.12 is referred to as a Brønsted acid desulfurization agent. Thus, if the above description is expressed in other words, the present invention includes a method involving, as a pretreatment in the desulfurization method using a Lewis acid desulfurization agent, previously performing desulfurization with any one or both of an activated carbon desulfurization agent and a Brønsted acid desulfurization agent.

The activated carbon desulfurization agent in the present invention may be used as a desulfurization agent by subjecting activated carbon having a specific surface area of 200 $m^2/g$ or more and an average pore diameter of 20 Å or more to drying treatment. The activated carbon desulfurization agent may also improve the adsorption performance by complex formation with metals such as silver, mercury, copper, cadmium, lead, molybdenum, zinc, cobalt, manganese, nickel, platinum, palladium, iron and the like, and/or metal oxides, that is, supporting those metals. Activated carbon is a carbon material having a developed porous structure and is widely used industrially as an adsorptive desulfurization agent and a catalyst carrier. There also exist carbon materials such as anthracite, which exhibits an adsorption activity naturally, but activated carbon is generally produced by carbonizing a raw material for activated carbon which is an organic material (carbonaceous substance), and activating the resultant if necessary. However, the production method is not particularly limited. For the raw material for activated carbon, a number of carbonaceous materials are conceivable, and the production condition varies depending on the kind of the raw material. Examples of the raw material which may be used include plant materials such as wood, sawdust, coconut shell, and pulp spent liquor and fossil fuel materials such as coals, petroleum heavy oil, or pitch and coke as thermal decomposition products thereof. A fibrous activated carbon is obtained from a fiber obtained by spinning of a synthetic polymer, tar pitch, or petroleum pitch as a starting raw material. Coals are classified into brown coal, bituminous coal, and anthracite depending on a difference in degree of coalification. For the synthetic polymer serving as a starting raw material, a phenol resin, a furan resin, a polyvinyl chloride resin, a polyvinyl chloride vinylidene resin, and waste plastic can be given as a raw material. The activated carbon desulfurization agent is particularly preferably the adsorptive desulfurization agent described in WO 2003-097771.

The drying treatment for using activated carbon as a desulfurization agent is performed at 50 to 150°C and preferably 80 to 130°C for about 1 to 24 hours.

As mentioned above, the Lewis acid desulfurization agent is preferably used for removing sulfur compounds of benzothiophenes and dibenzothiophenes from the above-mentioned hydrocarbon oil. The Lewis acid desulfurization agent has a higher adsorption activity for dibenzothiophenes, in particular, alkyl dibenzothiophenes having many alkyl groups than the Brønsted acid desulfurization agent. The Lewis acid desulfurization agent exhibits high adsorption force, and hence, an adsorption isotherm of the sulfur compound is of a Langmuir type, and even in the case where sulfur compounds are present at a low concentration, the Lewis acid desulfurization agent has a high adsorption activity for sulfur compounds. Further, the mechanism by which the sulfur compound is adsorbed to the Lewis acid desulfurization agent is considered to be the above-mentioned n-electron adsorption mechanism. The reaction temperature is preferably 100°C or less.

The activated carbon desulfurization agent is used for removing sulfur compounds which are dibenzothiophenes from the above-mentioned hydrocarbon oil. The reaction temperature is preferably 100°C or less and particularly preferably 0 to 80°C. The activated carbon desulfurization agent exhibits a low adsorption activity for benzothiophenes, while exhibits a high adsorption activity for dibenzothiophenes. The sulfur compound in the activated carbon desulfurization agent has a Freundlich type adsorption isotherm. Therefore, the higher the concentration of the sulfur compounds is, the higher the adsorption activity for the sulfur compounds is. Further, because the specific surface area is relatively large, the saturated adsorption amount is large.

Meanwhile, as the Brønsted acid desulfurization agent, zeolite, silica alumina, activated clay, and solid superacids such as sulfate radical/zirconia, sulfate radical/alumina, sulfate radical/tin oxide, sulfate radical/iron oxide, tungstated zirconia, tungstated tin oxide and the like can be given. Those solid superacids often have both the Brønsted acidity and the Lewis acidity, but, in particular, exhibit strong Brønsted acidity, and hence can be used as Brønsted acid desulfurization agents. Of those, alumina desulfurization agents such as sulfate radical/alumina are preferred.

The acidity of a solid superacid catalyst can be adjusted according to the calcination temperature thereof. When the solid superacid catalyst is calcined at a high temperature of 800°C or more, Brønsted acidity is reduced and Lewis acidity is increased. Therefore, in the case where the solid superacid catalyst is used as a Brønsted acid desulfurization agent, it can be obtained by calcining at a temperature of less than 800°C, preferably 500 to 800°C, and more preferably 550 to 650°C in the calcination stage. Further, even when being calcined at a high temperature of 800°C or more, if the solid superacid catalyst is left to stand in the atmosphere to adsorb moisture, the Brønsted acidity is easily increased. Alternatively, the Brønsted acidity can also be increased by adjusting the sulfur content after calcination to more than 3.00% by mass. The sulfur content is preferably 3.00 to 5.00% by mass and more preferably 3.00 to 4.00% by mass.

At least one kind of zeolite selected from a proton type faujasite zeolite, a proton type mordenite and a proton type β-zeolite is also preferable as the Brønsted acid desulfurization agent. In particular, because with respect to those zeolites, the smaller silica/alumina ratio, the lager amount of acid serving as adsorption sites, the silica/alumina ratio is preferably 100 mol/mol or less, and more preferably 30 mol/mol or less.

Zeolite is a general term for crystalline hydrous aluminosilicates represented by the general formula of $xM_{2/n}O \cdot Al_2O_3 \cdot ySiO_2 \cdot zH_2O$ (wherein n represents a valency of cation M, x represents a number of 1 or less, y represents a number of 2 or more, and z represents a number of 0 or more). The zeolite holds a charge compensating cation such as an alkali metal or an alkaline earth metal in pores and caves thereof. The charge compensating cation can be easily replaced with another cation such as a proton or the like. Moreover, the $SiO_2/Al_2O_3$ molar ratio increases by an acid treatment and the like, which results in an increase of the acid strength and a decrease in the amount of solid acid. It is preferred not to reduce the amount of solid acid, because adsorption of a sulfur compound is not so affected by the acid strength.

The charge compensating cation in the zeolite used for the above-mentioned desulfurization means is a proton, i.e., hydrogen. The content of cations other than the proton, such as sodium, potassium, magnesium, calcium and the like is preferably 5% by mass or less, more preferably 3% by mass or less, and still more preferably 1% by mass or less.

For properties of the above-mentioned zeolite crystal, the crystallinity is preferably 80% or more and particularly preferably 90% or more, the crystallite diameter is preferably 5 $\mu$m or less and particularly preferably 1 $\mu$m or less, the average particle diameter is preferably 30 $\mu$m or less and particularly preferably 10 $\mu$m or less, and the specific surface area is preferably 300 $m^2$/g or more and particularly preferably 400 $m^2$/g or more.

The Brønsted acid desulfurization agent is also used for removing sulfur compounds which are benzothiophenes from the above-mentioned hydrocarbon oil. The Brønsted acid desulfurization agent is preferably used under the following reaction condition; without using hydrogen, under an atmospheric pressure, and at a temperature ranging from ambient temperature (0 to 40°C) to about 150°C. The reaction temperature is more preferably 0 to 120°C and particularly preferably 0 to 40°C from the viewpoints of economical efficiency of a desulfurization reaction and miniaturization of a desulfurizer using the desulfurization agent. The Brønsted acid desulfurization agent provides an adsorptive desulfurization mechanism with a reaction, and even in the case where the concentration of sulfur compounds is low in the hydrocarbon oil, the Brønsted acid desulfurization agent has a higher adsorption activity for sulfur compounds than the activated carbon desulfurization agent. However, because the Brønsted acid desulfurization agent is low in activity for dibenzothiophenes, in particular, alkyl dibenzothiophenes having many alkyl groups, it is difficult to maintain desired desulfurization performance for a long period of time.

For a pretreatment method, it is preferred to firstly use the activated carbon desulfurization agent and subsequently use the Brønsted acid desulfurization agent. Meanwhile, in the case where the sulfur content in a hydrocarbon oil to be treated is originally low, e.g., 1 to 5 ppm, it is not necessarily required to use the activated carbon desulfurization agent for the pretreatment, and the Brønsted acid desulfurization agent may be used as a first desulfurization agent, and then, the Lewis acid desulfurization agent may be used as a second desulfurization agent. In addition, when gas oil or the like containing no benzothiophenes is desulfurized, it is not necessarily required to use the Brønsted acid desulfurization agent, and the activated carbon desulfurization agent may be used as a first desulfurization agent, and then, the Lewis acid desulfurization agent may be used as a second desulfurization agent.

Examples

Hereinafter, the present invention is described in more detail by way of examples. However, the present invention is not limited to the examples.

[Preparation of desulfurization agent]

The following four kinds of γ-alumina were used as alumina raw materials (extrudates):

Alumina A (shape: column with quatrefoil cross section, major axis: 1.3 mm, average length: about 5 mm, specific surface area: 241 $m^2$/g, pore volume: 0.72 ml/g);
Alumina B (shape: column with quatrefoil cross section, major axis: 1.3 mm, average length: about 5 mm, specific surface area: 302 $m^2$/g, pore volume: 0.72 ml/g);
Alumina C (shape: column with circular cross section, diameter: 1.6 mm, average length: about 5 mm, specific surface area: 205 $m^2$/g, pore volume: 0.77 ml/g); and
Alumina D (shape: column with a circular cross section, diameter: 0.8 mm, average length: about 5 mm, specific surface area: 223 $m^2$/g, pore volume: 0.71 ml/g).

For each alumina, γ-alumina powder was kneaded with a 3.5% nitric acid aqueous solution, subjected to extrusion molding, and then dried at 130°C overnight. After drying, alumina was impregnated with a sulfate radical by using a sulfuric acid aqueous solution having the "Concentration of sulfuric acid aqueous solution for impregnation" shown in each of Tables 1a and 1b (precisely, in the tables shown shortly as "Sulfuric acid concentration for impregnation"), dried, and then calcinated at a calcination temperature as shown in each of Tables 1a and 1b to prepare a solid acid. The obtained solid acids were used as-is as desulfurization agents 1 to 24 for a desulfurization experiment and evaluated.

In the case where a sulfate radical was supported, in order to prevent the unevenness in adsorption of the sulfate radical, the water adsorption rate of alumina was measured, and alumina was impregnated with a sulfuric acid aqueous solution in an amount corresponding to the adsorption rate. Specifically, the mass W1 of dry-alumina was measured, the dry-alumina was sufficiently impregnated with ion-exchange water, and then sufficiently dewatered using a centrifuge, to thereby measure the mass W2 of water containing alumina. The water adsorption rate [% by mass] with respect to dry-alumina was calculated with the following equation (1).

$$\text{Water adsorption rate [\% by mass]}=100\times(W2-W1)/W1 \qquad (1)$$

Each alumina was impregnated with a sulfuric acid aqueous solution in an amount corresponding to the water adsorption rate by a spray method, and then, the temperature was elevated in 1 hour to a calcination temperature (400 to 900°C) as shown in each of Tables 1a and 1b at a flow rate of air of 17 m/sec by using a rotary kiln. When the temperature reaches a predetermined calcination temperature, calcination was performed for 1 hour while keeping the temperature. After that, the resultant was left to stand for cooling to room temperature in a desiccator.

It should be noted that, in each of Tables 1a and 1b, a desulfurization agent, in which "None" is described in the column " Sulfuric acid concentration for impregnation," is not performed the impregnation treatment with sulfuric acid. A desulfurization agent 20 refers to a desulfurization agent obtained by calcination at a calcination temperature of 1,000°C with an electric furnace without airflow. Further, a desulfurization agent 25 is a desulfurization agent obtained by impregnating activated alumina (F-200 manufactured by Alcoa Inc., specific surface area: 367 $m^2/g$, pore volume: 0.40 ml/g) with a 4.0 mol/L sulfuric acid aqueous solution, and then performing calcination at 725°C. Tables 1a and 1b each show not only preparation conditions of the desulfurization agent but also characteristics (specific surface area, pore volume, sulfur content, mass loss rate, and the like) of the obtained desulfurization agent.

A mass loss rate (A) from 250°C to 700°C and a mass loss rate (B) from 250°C to 1,000°C were calculated by the following formula (2) as a mass loss rate [% by mass] using the sample mass W0 at 250°C and the sample mass W at 700°C (or 1,000°C) which were obtained by thermal mass measurement (apparatus: TG/DTA 6300R manufactured by Seiko Instruments Inc., reference side: open Pt pan 5 mm in diameter×2.5 mm, sample side: open Pt pan 5 mm in diameterx2.5 mm and about 15 mg of sample, measurement atmosphere: air at 200 ml/min, and temperature condition: heating rate from 50°C to 1,000°C of 10°C/min).

$$\text{Mass loss rate [\% by mass]}=100\times(W0-W)/W0 \quad (2)$$

Then, the ratio (B/A) of the mass loss rate (B) from 250°C to 1,000°C to the mass loss rate (A) from 250°C to 700°C was determined. Tables 1a and 1b each show the ratio (B/A) together with the mass loss rates (A) and (B).

The percentage of a Lewis acid amount and a Brønsted acid amount were analyzed with a pyridine adsorption Fourier transform infrared spectroscopy (FT-IR) apparatus (Avatar 360 manufactured by Nicolet). About 0.0070 g of a sample was molded into a disk shape having a diameter of 10 mm and the disk was fixed to a cell. Then, vacuum evacuation was performed at 500°C for 1 hour. After that, the temperature was cooled to 30°C, a reference was measured under vacuum, and the temperature was risen to 100°C, pyridine was then adsorbed for 5 minutes. The temperature was risen to 150°C, and vacuum evacuation was performed for 1 hour to remove the pyridine which was physically adsorbed. After that, the temperature was cooled to 30°C and the sample was measured under vacuum. The resulting data and reference data were expressed as absorbance through Fourier transformation. A peak of an absorbance attributed to a Lewis acid site was detected at $1,450\pm5$ $cm^{-1}$, a peak of an absorbance attributed to a Brønsted acid site was detected at $1,540\pm5$ $cm^{-1}$, and a peak absorbance attributed to both a Lewis acid and a Brønsted acid was detected at $1490\pm5$ $cm^{-1}$. The peak height of the Lewis acid site ($1,450\pm5$ $cm^{-1}$) was defined as $I_{1,450}$, and the peak height of the Brønsted acid site ($1,540\pm5$ $cm^{-1}$) was defined as $I_{1,540}$. The ratio $I_{1,540}/I_{1,450}$ of the Brønsted acid amount to the Lewis acid amount was shown in each of Tables 1a and 1b.

[Table 1a]

| | | Alumina kind /content | Sulfuric acid concentration for impregnation | Calcining temperature | Specific surface area | Pore volume | Sulfur content | Mass loss rate (A) 250-700°C | Mass loss rate (B) 250-1000°C | Ratio of mass loss rate (B/A) | spectroscopic peak ratio $I_{1,540}/I_{1,450}$ |
|---|---|---|---|---|---|---|---|---|---|---|---|
| | | [mass%] | [mol/L] | [°C] | [m$^2$/g] | [ml/g] | [mass%] | [mass%] | [mass%] | [-] | [-] |
| Desulfurizing agent | 1 | A/100 | 0.5 | 800 | 233 | 0. 71 | 1.52 | – | – | – | 0.00 |
| | 2 | A/100 | 0.5 | 900 | 200 | 0.71 | 1.02 | – | – | – | 0.00 |
| | 3 | A/100 | 1.0 | 800 | 232 | 0.71 | 2.13 | – | – | – | 0.00 |
| | 4 | A/100 | 1.0 | 900 | 202 | 0.72 | 1.13 | – | – | – | 0.00 |
| | 5 | A/100 | 4.0 | 900 | 200 | 0.70 | 1.00 | – | – | – | 0.00 |
| | 6 | A/100 | 6.0 | 800 | 222 | 0.66 | 2.13 | – | – | – | – |
| | 7 | A/100 | 6.0 | 900 | 199 | 0.67 | 0.98 | – | – | – | – |
| | 8 | B/100 | None | 600 | 222 | 0.72 | 0.45 | 2.28 | 3.44 | 1.51 | 0.00 |
| | 9 | B/100 | None | 700 | 285 | 0.73 | 0.44 | – | – | – | 0.00 |
| | 10 | B/100 | None | 800 | 258 | 0.71 | 0.45 | – | – | – | 0.00 |
| | 11 | B/100 | None | 900 | 222 | 0.69 | 0.44 | 1.84 | 2.58 | 1.40 | 0.00 |
| | 12 | B/100 | 0.5 | 800 | 268 | 0.70 | 1.46 | 1.98 | 4.05 | 2.05 | 0.00 |
| | 13 | B/100 | 0.5 | 900 | 215 | 0.68 | 1.05 | 1.80 | 2.97 | 1.65 | 0.00 |
| | 14 | B/100 | 1.0 | 800 | 265 | 0.68 | 2.16 | 1.95 | 5.68 | 2.91 | 0.00 |
| | 15 | B/100 | 1.0 | 900 | 219 | 0.69 | 1.21 | 1.60 | 3.02 | 1.89 | 0.00 |

[Table 1b]

| | Alumina kind /content [mass%] | Sulfuric acid concentration for impregnation [mol/L] | Calcining temperature [°C] | Specific surface area [m²/g] | Pore volume [ml/g] | Sulfur content [mass%] | Mass loss rate (A) 250–700°C [mass%] | Mass loss rate (B) 250–1000°C [mass%] | Ratio of mass loss rate (B/A) [-] | spectroscopic peak ratio $I_{1,540}/I_{1,450}$ [-] |
|---|---|---|---|---|---|---|---|---|---|---|
| 16 | B/100 | 6.0 | 800 | 222 | 0.66 | 2.13 | - | - | - | - |
| 17 | B/100 | 6.0 | 900 | 199 | 0.67 | 0.98 | - | - | - | - |
| 18 | B/100 | None | 600 | 222 | 0.72 | 0.45 | 2.28 | 3.44 | 1.51 | 0.00 |
| 19 | B/100 | None | 700 | 285 | 0.73 | 0.44 | - | - | - | 0.00 |
| 20 | B/100 | None | 800 | 258 | 0.71 | 0.45 | - | - | - | 0.00 |
| 21 | B/100 | None | 900 | 222 | 0.69 | 0.44 | 1.84 | 2.58 | 1.40 | 0.00 |
| 22 | B/100 | 0.5 | 800 | 268 | 0.70 | 1.46 | 1.98 | 4.05 | 2.05 | 0.00 |
| 23 | C/100 | 0.5 | 900 | 215 | 0.68 | 1.05 | 1.80 | 2.97 | 1.65 | 0.00 |
| 24 | D/100 | 1.0 | 800 | 265 | 0.68 | 2.16 | 1.95 | 5.68 | 2.91 | 0.00 |
| 25 | (*1)/100 | 1.0 | 900 | 219 | 0.69 | 1.21 | 1.60 | 3.02 | 1.89 | 0.00 |
| 26 | (*2)/ 31 | 1.0 | 800 | 265 | 0.68 | 2.16 | 1.95 | 5.68 | 2.91 | 0.00 |
| 27 | (*3)/ 25 | 1.0 | 900 | 219 | 0.69 | 1.21 | 1.60 | 3.02 | 1.89 | 0.00 |

Desulfurizing agent

*1: Amorphous

*2: Sulfate radical/zirconia·alumina

*3: Tungstated zirconia·alumina

[Desulfurization experiment in immersion system]

The desulfurization agents 1 to 25 prepared as described above, the desulfurization agent 26 of sulfate radical/ zirconia·alumina (specific surface area: 162 m$^2$/g, pore volume: 0.31 ml/g, zirconia: 59% by mass, alumina: 31% by mass, and sulfur: 2.9% by mass), and the desulfurization agent 27 of tungstated zirconia·alumina (specific surface area: 101 m$^2$/g, pore volume: 0.30 ml/g, zirconia: 53% by mass, alumina: 25% by mass, tungstate: 20% by mass, and sulfur: 0.01% by mass or less) were used as desulfurization agents to perform a desulfurization experiment by immersing the agents in kerosene. The desulfurization agent 26 was obtained by kneading zirconium hydroxide, hydrated alumina (pseudoboehmite powder) and ammonium sulfate, subjecting the resultant to extrusion molding, and performing calcination at 675°C. The desulfurization agent 27 was obtained by calcination at 800°C using ammonium metatungstate, zirconium hydroxide and hydrated alumina (pseudoboehmite powder). The desulfurization agents 26 and 27 each had a columnar shape with a circular cross section, a diameter of 1. 6 mm, and an average length of about 5 mm.

The mass proportion of kerosene to the respective desulfurization agents (liquid/solid ratio) was set to 4, 30 and 240. Each of the desulfurization agents was immersed in kerosene and left to stand still at 10 °C for 7 days to achieve an adsorption equilibrium state sufficiently, and then, kerosene was taken out, and the sulfur content was analyzed by a combustion oxidation-ultraviolet fluorescence method. The percentage of the sulfur removed by adsorption was calculated as a desulfurization rate [%] from a value of a sulfur content in kerosene before and after immersion using the following equation (2).

$$\texttt{Desulfurization rate [\%]=100×(S1-S2)/S1 \quad (2)}$$

In the equation (2), S1 and S2 represent a sulfur content in kerosene before and after immersion, respectively.

For kerosene, two kinds of kerosene (kerosene A and kerosene B) manufactured by Japan Energy Corporation were used. Kerosene A had physical properties of a boiling point ranging from 157.0 to 270.0°C, a density (15°C) of 0.7984 g/ml, an aromatic content of 18.0% by volume, a saturate content of 81.8% by volume, an olefin content of 0.2% by volume, a sulfur content of 13.6 ppm by mass, a sulfur content derived from a light sulfur compound (a sulfur compound lighter than benzothiophene) of 0.02 ppm by mass, a sulfur content derived from benzothiophenes (benzothiophene, and a sulfur compound heavier than benzothiophene and lighter than dibenzothiophene) of 9.1 ppm by mass, a sulfur content derived from dibenzothiophenes (dibenzothiophene, and a sulfur compound heavier than dibenzothiophene) of 4.5 ppm by mass, and a nitrogen content of 0.5 ppm or less. Further, kerosene B has a boiling point ranging from 146.5 to 278.0°C, a density (15°C) of 0.7944 g/ml, an aromatic content of 17.8% by volume, a saturate content of 82.2% by volume, an olefin content of 0.0% by volume, a sulfur content of 5.6 ppm by mass, a sulfur content derived from a light sulfur compound (a sulfur compound lighter than benzothiophene) of 0.03 ppm by mass, a sulfur content derived from benzothiophenes (benzothiophene, and a sulfur compound heavier than benzothiophene and lighter than dibenzothiophene) of 2.8 ppm by mass, a sulfur content derived from dibenzothiophenes (dibenzothiophene, and a sulfur compound heavier than dibenzothiophene) of 2.8 ppm by mass, and a nitrogen content of 0.5 ppm or less.

The results of the desulfurization experiment in immersion system were shown in table 2. As can be seen from Table 2, according to the desulfurization method (Examples 1 to 20) of the present invention, it reveals that an extremely high desulfurization rate is obtained irrespective of the kind of kerosene.

[Table 2]

| | | | Kerosene A desulfurization rate [%] | | | Kerosene B desulfurization rate [%] | | |
|---|---|---|---|---|---|---|---|---|
| | | | Liquid/solid ratio = 4 | Liquid/solid ratio = 30 | Liquid/solid ratio = 240 | Liquid/solid ratio = 4 | Liquid/solid ratio = 30 | Liquid/solid ratio = 240 |
| Example 1 | | 1 | 100 | 98 | 58 | 100 | 97 | 49 |
| Example 2 | | 2 | 100 | 100 | 59 | 100 | 100 | 35 |
| Example 3 | | 3 | 100 | 93 | 47 | 100 | 91 | 47 |
| Example 4 | | 4 | 100 | 99 | 53 | 100 | 98 | 40 |
| Example 5 | | 5 | 100 | 99 | 45 | 100 | 99 | 47 |
| Example 6 | | 6 | 100 | 85 | 38 | 100 | 84 | 43 |
| Example 7 | | 7 | 100 | 97 | 48 | 100 | 97 | 41 |
| Example 8 | Desulfurizing agent | 8 | – | 99 | 68 | – | 100 | 31 |
| Example 9 | | 9 | 100 | 100 | 70 | 100 | 100 | 37 |
| Example 10 | | 10 | 100 | 100 | 68 | 100 | 100 | 42 |
| Example 11 | | 11 | 100 | 100 | 61 | 100 | 100 | 39 |
| Example 12 | | 12 | 100 | 100 | 63 | 100 | 100 | 53 |
| Example 13 | | 13 | 100 | 100 | 59 | 100 | 100 | 36 |
| Example 14 | | 14 | 100 | 98 | 52 | 100 | 96 | 49 |
| Example 15 | | 15 | 100 | 99 | 54 | 100 | 98 | 44 |
| Comparative example 1 | | 16 | 100 | 78 | – | 99 | 74 | – |
| Comparative example 2 | | 17 | 99 | 80 | – | 97 | 78 | – |
| Example 16 | | 18 | 100 | 84 | 41 | 99 | 84 | 45 |
| Example 17 | | 19 | 100 | 99 | 47 | 100 | 98 | 50 |
| Comparative example 3 | | 20 | 100 | 78 | 29 | 100 | 91 | 9 |
| Example 18 | | 21 | 100 | 91 | 39 | 100 | 87 | 46 |
| Example 19 | | 22 | 100 | 98 | 50 | 100 | 96 | 45 |
| Comparative example 4 | | 23 | 93 | 58 | 36 | 87 | 65 | |
| Comparative example 5 | | 24 | – | – | – | – | – | 9 |
| Example 20 | | 25 | 96 | – | – | – | – | – |
| Comparative example 6 | | 26 | – | 73 | 16 | 97 | 60 | 23 |
| Comparative example 7 | | 27 | – | 61 | 33 | 100 | 74 | 23 |

(Example 21)

[Desulfurization experiment in continuous flow system]

The desulfurization agent 15, a weight of 35 g, was filled into a column having a length of 600 mm and an internal volume of 54 ml. Kerosene B was flowed through the column at 25°C at a flow rate of 0.1 ml/min to perform a desulfurization experiment in continuous flow system. The sulfur content in the desulfurized kerosene discharged from the column was analyzed by the combustion oxidation-ultraviolet fluorescence method in the same manner as that in the above-mentioned experiment. As a result, the sulfur content in desulfurized kerosene was equal to or less than the minimum limit of determination (20 ppb by mass) over a period of 40 hours from beginning of discharge of kerosene from the column. The results confirmed that the desulfurization method of the present invention also exhibited an extremely high desulfurization rate in the desulfurization in continuous flow system.

(Example 22)

In a desulfurizer with an internal volume of 4.1 L, 0.2 L of copper oxide/silver oxide-supported activated carbon (copper content: 8% by mass, silver content: 1% by mass, and particle size: about 3 mm) as an activated carbon desulfurization agent was filled into the uppermost stream side of the desulfurizer, then, 0.6 L of a copper oxide-supported alumina desulfurization agent (specific surface area: 267 $m^2$/g, pore volume: 0.64 ml/g, sulfur content: 0.5% by mass, copper content: 0.5% by mass, diameter: 0.8 mm, and particle size: 0.1 to 0.6 mm) as a Brønsted acid desulfurization agent was filled, and 3.3 L of a sulfated alumina desulfurization agent (spectroscopic peak ratio $I_{1,540}/I_{1,450}$: 0.000, specific surface area: 295 $m^2$/g, pore volume: 0.67 ml/g, sulfur content: 0.5% by mass, and particle size: 0.1 to 0. 6 mm) as a Lewis acid desulfurization agent were filled into the lowermost stream side of the desulfurizer. The filling was performed by using each of the agents formed into a slurry with desulfurized kerosene having a sulfur content of 20 ppb or less.
The same kerosene as that in Example 1 was flowed from the bottom up at a flow rate of 105 ml/hr (LHSV: 0.026 $hr^{-1}$ and apparent linear velocity: 0.025 cm/min) under a condition of hydrogen free and, in all time, ambient temperature and atmospheric pressure, and a sulfur compound in the discharged kerosene was analyzed through GC-ICP-MS.
The sulfur content at the outlet was 5 ppb or less until 450 hours and 20 ppb or less at 1,000 hours or more (Fig. 1).

[Test method]

The measurement of physical properties and the like of the desulfurization agent and kerosene, which was not particularly described in the above, was performed in accordance with the following test method.

·Distillation characteristics: measured in accordance with JIS K2254.
·Density (15°C): measured in accordance with JIS K2249.
·Component composition of hydrocarbon (aromatic content, saturate content and olefin content) : measured in accordance with an IP (The Institute of Petroleum) standard method 391/95 (Analysis of aromatic hydrocarbons in middle distillates with high-performance liquid chromatograph using a refractive index detector).

·Sulfur content (total sulfur content): analyzed by a combustion oxidation-ultraviolet fluorescence method.
·Sulfur compound type analysis (sulfur content in a fraction lighter than benzothiophene, benzothiophenes and dibenzothiophenes): analyzed by GC-ICP-MS.
·Nitrogen content: measured in accordance with a microcoulometric titration method described in JIS K2609.
·Alumina content: analyzed with an ICP-AES (inductively coupled plasma atomic emission spectrometer) for a sample subjected to alkali fusion and dissolved in an acidic solution.
·Kind of alumina: analyzed with x-ray diffraction.
·Sulfur content: analyzed by measuring an infrared ray absorption intensity of sulfur dioxide during combustion oxidation.
·Specific surface area: measured by a nitrogen adsorption method and calculated by a BET (Brunouer-Emmett-Teller) method.
·Pore volume: measured by a nitrogen adsorption method.

Industrial Applicability

The solid acid of the present invention can be utilized as a desulfurization agent. Further, the desulfurization method of the present invention can be utilized for desulfurization of a hydrocarbon oil, inter alia, kerosene, gas oil, or the like as a raw fuel for generating hydrogen to be used in a fuel cell.

**Claims**

1. A solid acid, comprising 20 to 99.9% by mass of aluminum oxide and 0.10 to 3.00% by mass of sulfur, and having a specific surface area of 150 m$^2$/g or more, a pore volume of 0.35 ml/g or more, and a ratio ($I_{1,540}/I_{1,450}$) of a peak height $I_{1,540}$ of a peak (1,540±5 cm$^{-1}$) attributed to a Brønsted acid site to a peak height $I_{1,450}$ of a peak (1,450±5 cm$^{-1}$) attributed to a Lewis acid site of 0.12 or less, the peaks being measured by pyridine adsorption Fourier transform infrared spectroscopy.

2. A solid acid according to claim 1, wherein the solid acid has a ratio (B/A) of a mass loss rate (B) from 250°C to 1,000°C to a mass loss rate (A) from 250°C to 700°C of 1.3 or more.

3. A solid acid according to claim 1 or 2, wherein aluminum oxide is γ-alumina.

4. A method for preparing the solid acid according to any one of claims 1 to 3, comprising impregnating aluminum oxide having a specific surface area of 200 m$^2$/g or more with a sulfuric acid aqueous solution, and performing calcination at 500 to 980°C.

5. A method for preparing the solid acid according to claim 4, wherein the sulfuric acid aqueous solution has a sulfuric acid concentration of 0.01 to 6 mol/L.

6. A method for desulfurizing a hydrocarbon oil, comprising bringing a desulfurization agent comprising or comprising the solid acid according to any one of claims 1 to 3 into contact with the hydrocarbon oil.

7. A method for desulfurizing a hydrocarbon oil according to claim 6, comprising bringing the desulfurization agent into contact with the hydrocarbon oil at a temperature of 100°C or less.

8. A method for desulfurizing a hydrocarbon oil according to claim 6 or 7, comprising, as a pretreatment in the method for desulfurizing, previously performing desulfurization with any one or both of an activated carbon desulfurization agent and a desulfurization agent comprising or containing a solid acid having a ratio ($I_{1,540}/I_{1,450}$) of a peak height $I_{1,540}$ of a peak (1,540±5 cm$^{-1}$) attributed to a Brønsted acid site to a peak height $I_{1,450}$ of a peak (1,450±5 cm$^{-1}$) attributed to a Lewis acid site of more than 0.12, the peaks being measured by pyridine adsorption Fourier transform infrared spectroscopy.

9. A method for desulfurizing a hydrocarbon oil according to any one of claims 6 to 8, comprising, as a pretreatment of the method for desulfurizing, performing desulfurization with an activated carbon desulfurization agent and then previously performing desulfurization with a desulfurization agent comprising or containing a solid acid having a ratio ($I_{1,540}/I_{1,450}$) of a peak height $I_{1,540}$ of a peak (1,540±5 cm$^{-1}$) attributed to a Brønsted acid site to a peak height $I_{1,450}$ of a peak (1,450±5 cm$^{-1}$) attributed to a Lewis acid site of more than 0.12, the peaks being measured by pyridine adsorption Fourier transform infrared spectroscopy.

10. A method for desulfurizing a hydrocarbon oil according to any one of claims 6 to 9, wherein the hydrocarbon oil is kerosene.

11. A fuel cell system using the method for desulfurizing a hydrocarbon oil according to any one of claims 6 to 10.

Fig. 1

## INTERNATIONAL SEARCH REPORT

| International application No. |
|---|
| PCT/JP2008/065970 |

A.  CLASSIFICATION OF SUBJECT MATTER
*C01F7/02*(2006.01)i, *B01J20/02*(2006.01)i, *C10G25/00*(2006.01)i, *C10G25/05*
(2006.01)i, *H01M8/06*(2006.01)i

According to International Patent Classification (IPC) or to both national classification and IPC

B.  FIELDS SEARCHED

Minimum documentation searched (classification system followed by classification symbols)
C01F7/02, B01J20/02, C10G25/00, C10G25/05, H01M8/06

Documentation searched other than minimum documentation to the extent that such documents are included in the fields searched
Jitsuyo Shinan Koho          1922-1996   Jitsuyo Shinan Toroku Koho   1996-2008
Kokai Jitsuyo Shinan Koho    1971-2008   Toroku Jitsuyo Shinan Koho   1994-2008

Electronic data base consulted during the international search (name of data base and, where practicable, search terms used)

C.  DOCUMENTS CONSIDERED TO BE RELEVANT

| Category* | Citation of document, with indication, where appropriate, of the relevant passages | Relevant to claim No. |
|---|---|---|
| X <br> A | NAGAI M et al., Surface Properties and Activities of Ru/Al$_2$O$_3$ Catalysts for Hydrodesulfurizaiton of Thiophene, Journal of Japan Petroleum Institute, 1997.07, Vol.40, No.4, page.272-281 | 1-3 <br> 6-11 |
| A | WO 2007/015391 A1  (Japan Energy Corp.), 08 February, 2007 (08.02.07), Claims; examples <br> & EP 1923451 A1 | 1-11 |
| A | JP 2005-082423 A  (Daiichi Kigenso Kagaku Kogyo Co., Ltd.), 31 March, 2005 (31.03.05), Examples; table 1; Fig. 7 (Family: none) | 1-11 |

[X]  Further documents are listed in the continuation of Box C.          [ ]  See patent family annex.

| | |
|---|---|
| *     Special categories of cited documents: <br> "A"  document defining the general state of the art which is not considered   to be of particular relevance <br> "E"  earlier application or patent but published on or after the international filing date <br> "L"  document which may throw doubts on priority claim(s) or which is cited to establish the publication date of another citation or other special reason (as specified) <br> "O"  document referring to an oral disclosure, use, exhibition or other means <br> "P"  document published prior to the international filing date but later than the priority date claimed | "T"  later document published after the international filing date or priority date and not in conflict with the application but cited to understand the principle or theory underlying the invention <br> "X"  document of particular relevance; the claimed invention cannot be considered novel or cannot be considered to involve an inventive step when the document is taken alone <br> "Y"  document of particular relevance; the claimed invention cannot be considered to involve an inventive step when the document is combined with one or more other such documents, such combination being obvious to a person skilled in the art <br> "&"  document member of the same patent family |

| Date of the actual completion of the international search <br>     04 December, 2008 (04.12.08) | Date of mailing of the international search report <br>     16 December, 2008 (16.12.08) |
|---|---|
| Name and mailing address of the ISA/ <br>     Japanese Patent Office | Authorized officer |
| Facsimile No. | Telephone No. |

Form PCT/ISA/210 (second sheet) (April 2007)

**INTERNATIONAL SEARCH REPORT**

International application No.

PCT/JP2008/065970

C (Continuation). DOCUMENTS CONSIDERED TO BE RELEVANT

| Category* | Citation of document, with indication, where appropriate, of the relevant passages | Relevant to claim No. |
|---|---|---|
| A | JP 3955990 B2 (Japan Energy Corp.),<br>08 August, 2007 (08.08.07),<br>& WO 2002/010314 A1 | 1-11 |
| A | JP 2003-277768 A (Cosmo Oil Co., Ltd.),<br>02 October, 2003 (02.10.03),<br>(Family: none) | 1-11 |
| P,A | JP 2007-311143 A (Japan Energy Corp.),<br>29 November, 2007 (29.11.07),<br>(Family: none) | 1-11 |

Form PCT/ISA/210 (continuation of second sheet) (April 2007)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP H0665602 B
- JP H07115842 B
- JP H06315628 A
- JP H06228570 A
- JP 2000042407 A
- JP 2003049172 A
- JP 2005002317 A
- WO 2005073348 A
- WO 2007015391 A
- WO 2007020800 A
- JP H0596171 A
- JP 2006145219 A
- WO 2003097771 A

### Non-patent literature cited in the description

- **Kazuhiro Washio.** *Shimadzu Review,* 1991, vol. 48 (1), 35-49
- Studies in Surface Science and Catalysis. *ACID-BASE CATALYSIS II,* 1994, vol. 90, 507